# EUROPEAN PATENT APPLICATION

(11) **EP 3 327 553 A1**
(43) Date of publication of application: **30.05.2018**
(21) Application number: 16728820.8
(22) Date of filing: 15.01.2016
(51) Int. Cl.: G06F 3/041, B32B 37/12

(54) **TOUCH DISPLAY SCREEN, MANUFACTURING METHOD FOR TOUCH DISPLAY SCREEN, AND JOINT ADHESIVE FIXTURE**

(30) Priority: 22.07.2015 CN 201510437830
(71) Applicant: BOE Technology Group Co., Ltd., Beijing 100015 (CN); Hefei Xinsheng Optoelectronics Technology Co., Ltd, Anhui 230012 (CN)
(72) Inventor: HU, Ming, Beijing 100176 (CN); LIU, Guodong, Beijing 100176 (CN)
(74) Representative: Cohausz & Florack
(86) International application number: PCT/CN2016/070986
(87) International publication number: WO 2017/012308

(57) **Abstract**

Disclosed are a touch display screen, a method for preparing touch display screen and an attaching adhesive jig. The touch display screen comprises a touch panel, a display panel and an attaching component. The attaching component includes a first attaching unit provided between the touch panel and the display panel. The first attaching unit consists of a plurality of solidified adhesive column. Upper and lower end surfaces of each of the solidified adhesive columns are bonded to an attaching surface of the touch panel and an attaching surface of the display panel, respectively. According to the disclosure, a problem that the touch display screen is whitening when displaying a black-grey image in the bending state can be improved without reducing the thickness of the display screen.

## Description

### Field of the Invention

The disclosure relates to the field of display technologies, and in particular to a touch display screen, a method for preparing touch display screen and an attaching adhesive jig.

### Background of the Invention

Touch display screens are more and more widely applied in apparatuses such as mobile phones, displays, notebook computers and televisions. In these apparatuses, the touch display screen of the notebook computer has a larger area than other display apparatuses and needs to frequently open and close. In the opening and the closing processes, the touch display screen may be distorted to some degree. Therefore, the touch display screen for the notebook computer needs to undergo a Bending test.

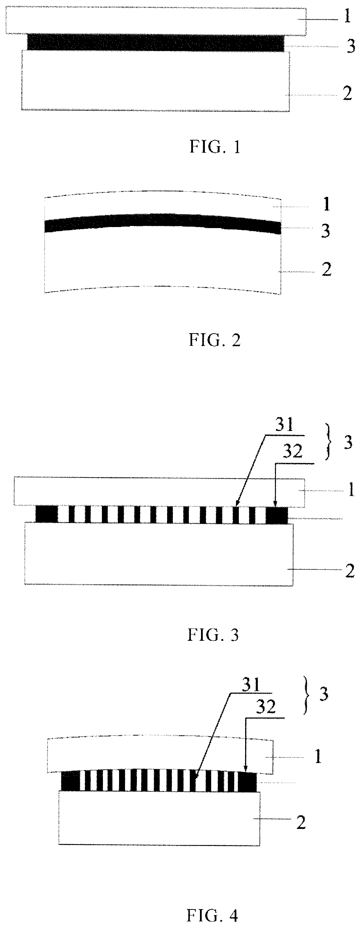

As shown in FIG. 1, a full-lamination process is adopted between a touch panel 1 and a display panel 2 of the touch display screen in the prior art (in FIG. 1, black area represents a attaching adhesive 3), so as to achieve the better display effect. However, in the Bending test of such a product, a large area of whitening phenomenon may occur when a black-grey image is displayed. This is because the stress generated when the touch display screen is bent cannot be efficiently absorbed by the attaching adhesive 3 such that the display panel 2 is bent by a large margin, as shown in FIG. 2. Since the stress cannot be efficiently absorbed by the attaching adhesive 3, a normal arrangement of liquid crystal molecules in the touch display screen may be disordered. This may result in light leak and whitening phenomenon.

One of technical schemes to address above problem is to reduce thickness of a glass substrate of display. The thinned glass substrate may better absorb the stress, thereby reducing the distortion margin of the display panel and improving the whitening phenomenon. However, in order to reduce the thickness of the glass substrate, generally the glass substrate needs to soak in HF and is subjected to an etching process. This may increase the cost of manufacturing and lower the yield of product. In addition, for an advanced production line, the glass substrate has a relatively large size. Since the size of the etching apparatus is limited, the glass substrate is first necessarily cut into a small size before the etching process. Thus a cutting process is necessarily introduced, thereby further increasing the cost of manufacturing and lowering the yield of product.

### Summary of the Invention

To resolve at least one of technique problems in the prior art, the disclosure provides a touch display screen, a method for preparing touch display screen and an attaching adhesive jig. According to the disclosure, a problem that the touch display screen is whitening when displaying a black-grey image in the bending state can be improved without reducing thickness.

In a first aspect, to achieve above objectives of the disclosure, there is provided a touch display screen, comprising a touch panel, a display panel and an attaching component. The attaching component includes a first attaching unit provided between the touch panel and the display panel, the first attaching unit consists of a plurality of solidified adhesive column, and upper and lower end surfaces of each of the solidified adhesive columns are bonded to an attaching surface of the touch panel and an attaching surface of the display panel, respectively.

Preferably, the solidified adhesive columns are uniformly distributed between the touch panel and the display panel.

Preferably, each of the solidified adhesive columns is formed into a cylinder shape.

Preferably, each of the solidified adhesive columns has a diameter of 3-5mm and a height of 0.2-0.3mm.

Preferably, a projected area of the first attaching unit on the touch panel occupies 40%-60% of the area of the touch panel.

Preferably, the attaching component further comprises a second attaching unit provided between the touch panel and the display panel; the second attaching unit encompasses the first attaching unit along peripheries of the touch panel and the display panel; and upper and lower end surfaces of the second attaching unit are bonded to the attaching surface of the touch panel and the attaching surface of the display screen, respectively.

Preferably, the second attaching unit has a width of 4-6mm.

In a second aspect, the disclosure also provides an attaching adhesive jig for preparing attaching adhesive, comprising a body and a plurality of attaching adhesive introduction parts disposed on the body; the plurality of attaching adhesive introduction parts have an equal length and length directions thereof are perpendicular to the body; each of the attaching adhesive introduction parts has an attaching adhesive introduction passage extending along the length direction thereof; and a plurality of attaching adhesive introduction holes communicating with the attaching adhesive introduction passages of the attaching adhesive introduction parts are provided on the body.

Preferably, the attaching adhesive introduction passage has a circle shape of cross section.

In a third aspect, the disclosure also provides a method for preparing touch display screen, comprising steps of:
providing a touch panel and a display panel;
forming a plurality of pre-solidified attaching adhesive columns on an attaching surface of the touch panel or the display panel; and
aligning and attaching the attaching surface of the touch panel with the attaching surface of the display panel, and completely solidifying the pre-solidified attaching adhesive columns to form a first attaching unit consisting of a plurality of solidified adhesive columns, wherein upper and lower end surfaces of the solidified adhesive columns are bonded to the attaching surface of the touch panel and the attaching surface of the display panel, respectively.

Preferably, the step of forming a plurality of pre-solidified attaching adhesive columns on an attaching surface of the touch panel or the display panel comprises:
aligning the attaching adhesive jig with the attaching surface of the touch panel or the display screen, wherein the attaching adhesive jig comprises a body and a plurality of attaching adhesive introduction parts disposed on the body, the attaching adhesive introduction parts have an equal length and length directions thereof are perpendicular to the body, each of the attaching adhesive introduction parts has an attaching adhesive introduction passage extending along the length direction thereof, and a plurality of attaching adhesive introduction holes communicating with the attaching adhesive introduction passages of the attaching adhesive introduction parts are provided on the body;
introducing attaching adhesive into the attaching adhesive jig, pre-solidifying the attaching adhesive introduced into the attaching adhesive jig, such that one end surface of the pre-solidified attaching adhesive is bonded to the attaching surface aligned with the attaching adhesive jig; and
removing the attaching adhesive jig.

Preferably, before the step of introducing attaching adhesive into the attaching adhesive jig, the method further comprises:
coating inner wall surfaces of the attaching adhesive introduction passages of the attaching adhesive introduction parts of the attaching adhesive jig with releasing agents.

Preferably, before the step of aligning and attaching the attaching surface of the touch panel with the attaching surface of the display panel, the method further comprises:
forming second pre-solidified attaching adhesive on the attaching surface of the touch panel or display panel, wherein the second pre-solidified attaching adhesive encompasses the plurality of pre-solidified attaching adhesive columns along peripheries of the touch panel and the display panel.

Preferably, after the step of aligning and attaching the attaching surface of the touch panel with the attaching surface of the display panel, the method further comprises:
completely solidifying the second pre-solidified attaching adhesive to form a second attaching unit, wherein upper and lower end surfaces of the second attaching unit are bonded to the attaching surface of the touch panel and the attaching surface of the display panel, respectively.

The embodiments of the disclosure have following beneficial effects:
In the touch display screen according to this embodiment, the touch panel and the display panel are bonded by the solidified adhesive columns of the first attaching unit. Compared with the full-lamination technique, the first attaching unit may provide better stress absorption. In such a manner, when the touch display screen is bent, much less stress may be transferred to the display panel, thereby lowering the bent degree of the display panel. In this case, the liquid crystal molecules in the display panel can be inclined to be kept in the normal arrangement, thereby avoiding the light leak and improving the whitening phenomenon. In the meanwhile, there is no need to reduce the thickness of the display panel.

According to the method for preparing touch display screen provided by the disclosure, the first attaching unit consisting of a plurality of solidified adhesive columns can be prepared between the touch panel and the display panel. Compared with the full-lamination technique, the first attaching unit may provide better stress absorption. In such a manner, when the touch display screen is bent, much less stress may be transferred to the display panel, thereby lowering the bent degree of the display panel. Therefore, the liquid crystal molecules in the display screen can be inclined to be kept in the normal arrangement, thereby avoiding the light leak and improving the whitening phenomenon. In the meanwhile, there is no need to reduce the thickness of the display panel.

The attaching adhesive jig according to the disclosure can prepare a plurality of solidified adhesive columns, and the first attaching unit consisting of the solidified adhesive columns can be applied to the touch display screen so as to attach the touch panel together with the display panel. Compared with the full-lamination technique, the first attaching unit prepared by the attaching adhesive jig according to the disclosure may provide better stress absorption. In such a manner, when the touch display screen is bent, much less stress may be transferred to the display panel, thereby lowering the bent degree of the display panel. Therefore, the liquid crystal molecules in the display panel can be inclined to be kept in the normal arrangement, thereby avoiding the light leak and improving the whitening phenomenon. In the meanwhile, there is no need to reduce the thickness of the display panel.

### Brief Description of the Drawings

Accompanying drawings are provided for further understanding of the disclosure and constituting a part of the specification. Hereinafter, these drawings are intended to explain the disclosure together with the following specific embodiments, but should not be considered as limiting of the disclosure. In which:
FIG. 1 is a schematic diagram illustrating a touch display screen using the full-lamination technique in the prior art;
FIG. 2 is a schematic diagram illustrating a state of the touch display screen as shown in FIG. 1 in a Bending test;
FIG. 3 is a schematic diagram illustrating a touch display screen according to an embodiment of the disclosure;
FIG. 4 is a schematic diagram illustrating a state of the touch display screen as shown in FIG. 3 in the Bending test;
FIG. 5 is a schematic top plan view of a attaching component;
FIG. 6 is a schematic top plan view of a attaching adhesive jig; and
FIG. 7 is a schematic section view of the attaching adhesive jig as shown in FIG. 6.

### Detailed Description of the Embodiments

Hereinafter, specific embodiments of the disclosure will be described in detail in conjunction with the accompanying drawings. It should be understood that the specific embodiments as set forth herein are merely for the purpose of illustration and explanation of the disclosure and should not be constructed as a limitation thereof.

There is provided a touch display screen according an embodiment of the disclosure. FIG. 3 is a schematic diagram illustrating the touch display screen according to the embodiment of the disclosure. As shown in FIG. 3, in this embodiment, the touch display screen includes a touch panel 1, a display panel 2 and an attaching component 3. The attaching component 3 includes a first attaching unit 31 provided between the touch panel 1 and the display panel 2. The first attaching unit 31 consists of a plurality of solidified adhesive columns, and upper and lower end surfaces of each of the solidified adhesive columns are bonded to an attaching surface of the touch panel 1 and an attaching surface of the display panel 2, respectively.

In this embodiment, the touch panel 1 and the display panel 2 are bonded by the solidified adhesive columns of the first attaching unit 31. Compared with the full-lamination as shown in FIG. 1, the first attaching unit 31 may provide better stress absorption. In such a manner, when the touch display screen is bent in the Bending test, much less stress may be transferred to the display panel 2, thereby lowering the bent degree of the display panel 2, as shown in FIG. 4. In this case, the liquid crystal molecules in the display panel 2 are more easily kept in the normal arrangement, thereby avoiding the light leak and improving the whitening phenomenon. In the meanwhile, there is no need to reduce the thickness of the display panel 2.

At this point, compared with the edge-lamination technique in the prior art, since the first attaching unit 31 is provided between the touch panel 1 and the display panel 2, the air occupies a reduced area in a valid display region between the touch panel 1 and the display panel 2. As such, compared with the touch display screen using the edge-lamination, better display effect can be achieved.

Preferably, the solidified adhesive columns of the first attaching unit 31 are uniformly distributed between the touch panel 1 and the display panel 2. In such an arrangement, attachment between the touch panel 1 and the first attaching unit 31 and between the display panel 2 and the first attaching unit 31 can be more stable, such that an improved fastness between the touch panel 1 and the display panel 2 can be provided.

In particular, the solidified adhesive columns of the first attaching unit 31 are formed into a cylinder shape. Preferably, for example, the solidified adhesive columns may have a diameter of 3-5mm and a height of 0.2-0.3mm.

In particular, a projected area of the first attaching unit 31 on the touch panel 1 occupies 40%-60% of the area of the touch panel 1, such that the first attaching unit 31 may have an excellent effect of stress absorption while the touch panel 1 and the display panel 2 may be firmly attached and the area occupied by the air may be reduced. Therefore, the better display effect can be achieved.

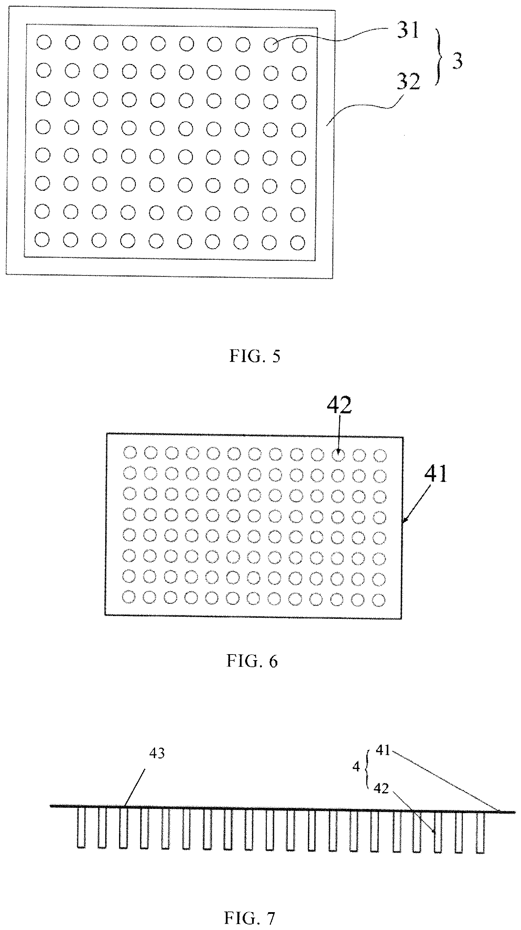

In this embodiment, preferably, as shown in FIG. 3 and FIG. 5, the attaching component 3 may further comprises a second attaching unit 32 provided between the touch panel 1 and the display panel 2. The second attaching unit 32 may encompass the first attaching unit 31 along peripheries of the touch panel 1 and the display panel 2, and upper and lower end surfaces of the second attaching unit 32 are bonded to the attaching surface of the touch panel 1 and the attaching surface of the display screen 2, respectively. The second attaching unit 32 can increase a contact area of the attaching component 3 with the touch panel 1 and the display panel 2, thereby improving a bonding strength between the touch panel 1 and the display panel 2. Preferably, for example, the second attaching unit 32 may have a width of 4-6mm and a height equal to that of the first attaching unit 31 (i.e., 0.2-0.3mm).

In the touch display screen according to this embodiment, the touch panel 1 and the display panel 2 are bonded by the solidified adhesive columns of the first attaching unit 31. Compared with the full-lamination as shown in FIG. 1, the first attaching unit 31 may provide better stress absorption. In such a manner, when the touch display screen is bent, much less stress may be transferred to the display panel 2, thereby lowering the bent degree of the display panel 2. Therefore, the liquid crystal molecules in the display panel 2 can be inclined to be kept in the normal arrangement, thereby avoiding the light leak and improving the whitening phenomenon. In the meanwhile, there is no need to reduce the thickness of the display panel 2.

In an embodiment of the disclosure, there is also provided an attaching adhesive jig for preparing columnar attaching adhesive. In this embodiment, as shown in FIG. 6 and FIG. 7, in particular, the attaching adhesive jig 4 may include a body 41 and a plurality of attaching adhesive introduction parts 42 disposed on the body; the attaching adhesive introduction parts 42 have an equal length and length directions thereof are perpendicular to the body 41; each of the attaching adhesive introduction parts 42 has an attaching adhesive introduction passage extending along the length direction thereof; a plurality of attaching adhesive introduction holes 43 communicating with the attaching adhesive introduction passages of the attaching adhesive introduction parts 42 are provided on the body 41. Preferably, the attaching adhesive introduction passage may have a circle shape of cross section.

The attaching adhesive jig according to the embodiment of the disclosure can be used to prepare a plurality of solidified adhesive columns, and the first attaching unit consisting of the solidified adhesive columns can be applied to the touch display screen so as to attach the touch panel together with the display panel. Compared with the full-lamination as shown in FIG. 1, the first attaching unit prepared by the attaching adhesive jig according to the disclosure may provide better stress absorption. In such a manner, when the touch display screen is bent, much less stress may be transferred to the display panel, thereby lowering the bent degree of the display panel. Therefore, the liquid crystal molecules in the display panel can be inclined to be kept in the normal arrangement, thereby avoiding the light leak and improving the whitening phenomenon. In the meanwhile, there is no need to reduce the thickness of the display panel.

In an embodiment of the disclosure, there is also provided a method for preparing touch display screen. In this embodiment, the method for preparing touch display screen may comprise a step of preparing a touch panel and a display panel. In addition, the method for preparing touch display screen may further comprise following steps S1-S3.

S1, providing a touch panel and a display panel;

In particular, At the step S1, the touch panel and the display panel are separately prepared. Preparation process of the touch panel and the display screen are well known, and thus the detailed description thereof will be omitted herein.

S2, forming a plurality of pre-solidified attaching adhesive columns on an attaching surface of the touch panel 1 or the display panel 2.

At the step S2, the touch panel 1 or the display panel 2 is firstly placed on a platform of a laminating machine, and then the pre-solidified attaching adhesive columns are formed on the touch panel 1 or the display panel 2.

In particular, step S2 may comprise:
S20, aligning the attaching adhesive jig with the attaching surface of the touch panel 1 or the display screen 2. The attaching adhesive jig may include a body and a plurality of attaching adhesive introduction parts disposed on the body; the attaching adhesive introduction parts have an equal length and length directions thereof are perpendicular to the body; each of the attaching adhesive introduction parts has an attaching adhesive introduction passage extending along the length direction thereof; and a plurality of attaching adhesive introduction holes communicating with the attaching adhesive introduction passages of the attaching adhesive introduction parts are provided on the body. In particular, the attaching adhesive jig may be as shown in FIG. 6 and FIG. 7.

S22, introducing attaching adhesive into the attaching adhesive jig, pre-solidifying the attaching adhesive introduced into the attaching adhesive jig, such that one end surface of the pre-solidified attaching adhesive is bonded to the attaching surface aligned with the attaching adhesive jig.

In conjunction with the attaching adhesive jig as shown in FIG. 6 and FIG. 7, At the step S22, the attaching adhesive is injected into the attaching adhesive introduction passages, a surface of the attaching adhesive jig is flattened by a scraper, and the attaching adhesive retained in the attaching adhesive introduction passages is solidified into columnar shapes.

S23, removing the attaching adhesive jig.

At the step S23, while the attaching adhesive jig is removed, only the attaching adhesive (i.e., the columnar pre-solidified attaching adhesive) bonded on the touch panel 1 or the display panel 2 is kept.

In this embodiment, preferably, prior to step S22, the method for preparing touch display screen may further comprise:
S21, coating inner wall surfaces of the attaching adhesive introduction passages of the attaching adhesive introduction parts of the attaching adhesive jig with releasing agents.

Prior to step S22, the coating of the releasing agents may assist in separating the solidified attaching adhesive from the attaching adhesive jig. Therefore, at the step S23, when removing the attaching adhesive jig, the columnar solidified attaching adhesive may not be removed along therewith.

S3, aligning and attaching the attaching surface of the touch panel with the attaching surface of the display panel, and completely solidifying the pre-solidified attaching adhesive columns to form a first attaching unit 31 consisting of the plurality of solidified adhesive columns, wherein upper and lower end surfaces of the solidified adhesive columns are bonded to the attaching surface of the touch panel 1 and the attaching surface of the display panel 2, respectively.

At the step S3, the display panel 2 is laminated to the touch panel 1 where the pre-solidified attaching adhesive columns are formed, or the touch panel 1 is laminated to the display panel 2 where the pre-solidified attaching adhesive columns are formed; following the lamination, the pre-solidified attaching adhesive columns are completely solidified, such that the attaching adhesive and the display panel 2 or the touch panel 1 are securely bonded. In other words, by the first attaching unit 31, the touch panel 1 and the display panel 2 are firmly laminated.

Preferably, prior to step S3, the method for preparing touch display screen may further comprise: forming second pre-solidified attaching adhesive on the attaching surface of the touch panel 1 or display panel 2, wherein the second pre-solidified attaching adhesive encompasses the pre-solidified attaching adhesive columns along peripheries of the touch panel 1 and the display panel 2.

In particular, the second pre-solidified attaching adhesive may be formed simultaneously with the pre-solidified attaching adhesive columns. In this case, a single attaching adhesive jig can be used to simultaneously form the pre-solidified attaching adhesive columns and the second pre-solidified attaching adhesive in one process. Steps of preparing the second pre-solidified attaching adhesive by the attaching adhesive jig are similar to those of preparing the pre-solidified attaching adhesive columns by the attaching adhesive jig as shown in FIG. 6, and thus the detailed description thereof will be omitted herein.

Of course, the second pre-solidified attaching adhesive may also be formed after the preparation of the pre-solidified attaching adhesive columns. In this case, the same attaching adhesive jig can be used to form the second attaching unit; or without using the attaching adhesive jig, the attaching adhesive is directly applied to the touch panel 1 or the display panel 2 and pre-solidifying the attaching adhesive to the second pre-solidified attaching adhesive.

After the attaching surface of the touch panel 1 is aligned and attached with the attaching surface of the display panel 2, the method for preparing touch display screen may further comprise: completely solidifying the second pre-solidified attaching adhesive to form a second attaching unit 32, wherein upper and lower end surfaces of the second attaching unit 32 are bonded to the attaching surface of the touch panel 1 and the attaching surface of the display panel 2, respectively.

According to the method for preparing touch display screen provided in this embodiment, the first attaching unit 31 consisting of a plurality of solidified adhesive columns can be prepared between the touch panel 1 and the display panel 2, and by the first attaching unit 31, the touch panel 1 and the display panel 2 can be laminated to each other. Compared with the full-lamination technique, the first attaching unit 31 may provide better stress absorption. In such a manner, when the touch display screen is bent, much less stress may be transferred to the display panel 2, thereby lowering the bent degree of the display panel 2. Therefore, the liquid crystal molecules in the display panel 2 can be inclined to be kept in the normal arrangement, thereby avoiding the light leak and improving the whitening phenomenon. In the meanwhile, there is no need to reduce the thickness of the display panel 2.

It should be understood that the above implementations are merely exemplary embodiments for the purpose of illustrating the principle of the disclosure, and the disclosure is not limited thereto. Various modifications and improvements can be made by a person having ordinary skill in the art without departing from the spirit and essence of the disclosure. Accordingly, all of the modifications and improvements also fall into the protection scope of the disclosure.

## Claims

1. A touch display screen, comprising a touch panel, a display panel and an attaching component, wherein
the attaching component includes a first attaching unit provided between the touch panel and the display panel;
the first attaching unit consists of a plurality of solidified adhesive column; and
upper and lower end surfaces of each of the solidified adhesive columns are bonded to an attaching surface of the touch panel and an attaching surface of the display panel, respectively.

2. The touch display screen according to claim 1, wherein
the solidified adhesive columns are uniformly distributed between the touch panel and the display panel.

3. The touch display screen according to claim 1, wherein
each of the solidified adhesive columns is formed into a cylinder shape.

4. The touch display screen according to claim 3, wherein
each of the solidified adhesive columns has a diameter of 3-5mm and a height of 0.2-0.3mm.

5. The touch display screen according to any one of claims 1-4, wherein
a projected area of the first attaching unit on the touch panel occupies 40%-60% of the area of the touch panel.

6. The touch display screen according to claim 1, wherein
the attaching component further comprises a second attaching unit provided between the touch panel and the display panel;
the second attaching unit encompasses the first attaching unit along peripheries of the touch panel and the display panel; and
upper and lower end surfaces of the second attaching unit are bonded to the attaching surface of the touch panel and the attaching surface of the display screen, respectively.

7. The touch display screen according to claim 6, wherein
the second attaching unit has a width of 4-6mm.

8. An attaching adhesive jig for preparing the attaching component according to claim 1, wherein
the attaching adhesive jig comprises a body and a plurality of attaching adhesive introduction parts disposed on the body;
the plurality of attaching adhesive introduction parts have an equal length and length directions thereof are perpendicular to the body;
each of the attaching adhesive introduction parts has an attaching adhesive introduction passage extending along the length direction thereof; and
a plurality of attaching adhesive introduction holes communicating with the attaching adhesive introduction passages of the attaching adhesive introduction parts are provided on the body.

9. The attaching adhesive jig according to claim 8, wherein
the attaching adhesive introduction passage has a circle shape of cross section.

10. A method for preparing touch display screen, wherein the method comprises steps of:
providing a touch panel and a display panel;
forming a plurality of pre-solidified attaching adhesive columns on an attaching surface of the touch panel or the display panel; and
aligning and attaching the attaching surface of the touch panel with the attaching surface of the display panel, and completely solidifying the pre-solidified attaching adhesive columns to form a first attaching unit consisting of a plurality of solidified adhesive columns, wherein upper and lower end surfaces of the solidified adhesive columns are bonded to the attaching surface of the touch panel and the attaching surface of the display panel, respectively.

11. The method for preparing touch display screen according to claim 10, wherein the step of forming a plurality of pre-solidified attaching adhesive columns on an attaching surface of the touch panel or the display panel comprises:
aligning the attaching adhesive jig with the attaching surface of the touch panel or the display screen, wherein the attaching adhesive jig comprises a body and a plurality of attaching adhesive introduction parts disposed on the body, the attaching adhesive introduction parts have an equal length and length directions thereof are perpendicular to the body, each of the attaching adhesive introduction parts has an attaching adhesive introduction passage extending along the length direction thereof, and a plurality of attaching adhesive introduction holes communicating with the attaching adhesive introduction passages of the attaching adhesive introduction parts are provided on the body;
introducing attaching adhesive into the attaching adhesive jig, pre-solidifying the attaching adhesive introduced into the attaching adhesive jig, such that one end surface of the pre-solidified attaching adhesive is bonded to the attaching surface aligned with the attaching adhesive jig; and
removing the attaching adhesive jig.

12. The method for preparing touch display screen according to claim 11, wherein before the step of introducing attaching adhesive into the attaching adhesive jig, the method further comprises:
coating inner wall surfaces of the attaching adhesive introduction passages of the attaching adhesive introduction parts of the attaching adhesive jig with releasing agents.

13. The method for preparing touch display screen according to any one of claims 10-12, wherein before the step of aligning and attaching the attaching surface of the touch panel with the attaching surface of the display panel, the method further comprises:
forming second pre-solidified attaching adhesive on the attaching surface of the touch panel or display panel, wherein the second pre-solidified attaching adhesive encompasses the plurality of pre-solidified attaching adhesive columns along peripheries of the touch panel and the display panel.

14. The method for preparing touch display screen according to claim 13, wherein after the step of aligning and attaching the attaching surface of the touch panel with the attaching surface of the display panel, the method further comprises:
completely solidifying the second pre-solidified attaching adhesive to form a second attaching unit, wherein upper and lower end surfaces of the second attaching unit are bonded to the attaching surface of the touch panel and the attaching surface of the display panel, respectively.
